# EUROPÄISCHE PATENTANMELDUNG

(11) **EP 0 669 235 A1**
(43) Veröffentlichungstag der Anmeldung: **30.08.1995**
(21) Anmeldenummer: 95101330.9
(22) Anmeldetag: 01.02.1995
(51) Int. Cl.: B60R 25/04, E05B 49/00

(54) **Schliess- und Motorstartsystem für ein motorangetriebenes Fahrzeug**

(30) Priorität: 05.02.1994 DE 4403655
(71) Anmelder: TEMIC TELEFUNKEN microelectronic GmbH, 74072 Heilbronn (DE)
(72) Erfinder: Hettich, Gerhard, Dr., D-90499 Dietenhofen (DE); Doerfler, Reiner, Dr., D-90403 Nürnberg (DE); Wiedemann, Werner, D-91074 Herzogenaurach (DE); Robitschko, Peter, D-71069 Sindelfingen (DE)
(74) Vertreter: Maute, Hans-Jürgen, Dipl.-Ing.

(57) **Zusammenfassung**

Beschrieben wird ein Schließ- und Motorstartsystem für ein motorangetriebenes Fahrzeug, das durch mechanische und elektrische Redundanz ohne mechanische Schlüssel auskommt. Das System besteht aus:
a) einer Sendeeinheit aus Fernbedienungseinheit und Transpondereinheit zum Übertragen eines codierten Signals,
b) mindestens einer im oder am Fahrzeug angebrachten Empfangseinheit aus mindestens einem Empfänger und mindestens einer Auswerteelektronikeinheit zur Detektion und Verifizierung des codierten Signals,
c) einer ersten Steuereinheit, die mit der Empfangseinheit verbunden ist und von dieser zum Öffnen/Verschließen der Fahrertüre aktivierbar/deaktivierbar ist,
d) einer am Fahrzeug angebrachten und extern aktivierbaren Vorrichtung zur Energieübermittlung, durch die Energie an die Transpondereinheit übermittelt werden kann,
e) einer weiteren Steuereinheit, die mit der Empfangseinheit verbunden ist und von dieser bei erfolgreicher Verifizierung des codierten Signals gleichzeitig mit dem Entriegeln/Verriegeln der Fahrertüre deaktivierbar/aktivierbar ist.

## Beschreibung

Bei motorangetriebenen Fahrzeugen ist die Herstellung der Zugangsberechtigung (Schließ-/Öffnungsvorgang) und die Inbetriebnahme (Motorstartvorgang) auf mechanischem Wege üblich; das Öffnen/Schließen der Fahrertür (Fahrzeugtüren) und auch die Bedienung des Zündschlosses (Entriegelung des Lenkradschlosses, Öffnen der Sicherheitsraste, Zündung/Anlassen) erfolgt mittels eines (meistens des gleichen) Fahrzeugschlüssels.

Daneben werden neuerdings auch kombinierte mechanischelektronische Systeme eingesetzt; bei diesen erfolgt der Schließvorgang auf elektronischem Wege mittels einer (IR-/HF-) Fernbedienung, wobei jedoch noch ein mechanischer Schlüssel als Notzugangsmöglichkeit beim Ausfall der Fernbedienung mitgeführt werden muß; der Motorstart wird mittels eines mechanischen Zündschlüssels über die Bedienung eines konventionellen Zündschlosses vorgenommen.

Nachteilig bei den angeführten Systemen ist, daß mechanische Schlüssel unbedingt erforderlich sind, was einerseits eine zusätzliche Belastung sowie eine gewisse Sicherheitsproblematik aufgrund der geringen Anzahl unterschiedlicher Schlüssel mit sich bringt, und andererseits ein aufwendig gestaltetes Zündschloß zur Erfüllung der gesetzlichen Anforderungen bzw. Auflagen hinsichtlich Diebstahlschutz (Lenkradschloß) und Fahrsicherheit (kein Abziehen während der Fahrt) notwendig macht.

Der Erfindung liegt die Aufgabe zugrunde, ein einfaches Schließ- und Motorstartsystem anzugeben, bei dem die genannten Nachteile vermieden werden und das demgegenüber vorteilhafte Eigenschaften aufweist.

Diese Aufgabe wird erfindungsgemäß durch die Merkmale im Kennzeichen des Patentanspruchs 1 gelöst.

Vorteilhafte Weiterbildungen der Erfindung ergeben sich aus den Unteransprüchen.

Gemäß der Erfindung wird bei motorangetriebenen Kraftfahrzeugen durch ein kombiniertes System für Schließvorgang und Motorstartvorgang die Zugangsberechtigung überprüft und die Inbetriebnahme realisiert. Hierbei werden durch sowohl eine externe (außerhalb des Fahrzeugs) als auch eine interne (im Fahrzeug) Redundanz des Schließsystems keinerlei mechanische Schlüssel benötigt; weiterhin ist der Motorstartvorgang derart an das Schließsystem (den Schließvorgang) gekoppelt, daß auf ein (aufwendiges) Zündschloß verzichtet werden kann.

Das System umfaßt folgende Komponenten:
a) eine Sendeeinheit ("Schlüssel") als integrierte Baueinheit aus einer Fernbedienungseinheit und einer Transpondereinheit. Sowohl die (batteriebetriebene) Fernbedienung als auch der Transponder können die Schließfunktion zum Öffnen/Schließen der Fahrzeugtüre(n) durch Übermittlung eines codierten Signals übernehmen: üblicherweise wird im normalen Betriebsfall die (langreichweitige) Fernbedienung eingesetzt, während der (kurzreichweitige) Transponder für den "Notfall" vorgesehen ist
b) eine Empfangseinheit mit mindestens einem im Fahrzeuginnern oder am Fahrzeug angebrachten Empfänger zur Detektion und mindestens einer Auswerteelektronikeinheit zur Überprüfung des von der Sendeeinheit übermittelten codierten Signals; die Auswerteelektronikeinheit-(en) kann (können) an einer beliebigen Stelle des Fahrzeugs - beispielsweise in einem anderen Steuergerät integriert - angebracht werden
c) eine erste Steuereinheit - beispielsweise das in der Fahrzeugtüre integrierte Steuergerät Türelektronik oder die Auswerteelektronikeinheit der Empfangseinheit -, die die Entriegelung/Verriegelung der Fahrzeugtüre(n) überwacht; diese Steuereinheit ist mit dem Empfänger der Empfangseinheit verbunden und wird durch das codierte Signal aktiviert/deaktiviert
d) eine Vorrichtung zur Energieübermittlung, die im Notfall (Ausfall der Schlüssel-Batterie, Ausfall der Fahrzeug-Batterie) die Energieerzeugung zur Kommunikation mit dem Transponder der Schlüsseleinheit gewährleistet und durch das vom Transponder übermittelte Codierungssignal ein öffnen der Türe(n) sicherstellt. Diese Vorrichtung ist beispielsweise eine an der Außenseite des Fahrzeugs in der Reichweite des Transponders angebrachte HF-Spule - diese ist beispielsweise im Türgriff integriert und kann durch Betätigung des Türgriffs aktiviert werden
e) eine weitere Steuereinheit (beispielsweise das Steuergerät Wegfahrsperre oder das Motorsteuergerät) als Diebstahlschutz, die nach der Verifizierung des codierten Schlüsselsignals gleichzeitig mit dem Öffnungs-/Schließvorgang der Fahrzeugtüre über die Verbindung Empfänger-Wegfahrsperre deaktiviert/aktiviert wird (Freigabesignal/Sperrsignal); ein Lenkradschloß als Sicherheitsmaßnahme ist somit nicht mehr erforderlich.

Zusätzlich kann das System noch beinhalten:
f) mindestens eine Vorrichtung als Hilfsenergiequelle, die mit der Vorrichtung zur Energieübermittlung verbunden ist und die dieser beim Ausfall der Fahrzeug-Batterie die für den Öffnungsvorgang der Fahrzeugtüre(n) benötigte Energie liefert. Die Hilfsenergiequelle kann beispielsweise eine kleine, langlebige (beispielsweise im Steuergerät für die Türelektronik integrierte) Batterie sein oder eine am Fahrzeug angebrachte, extern zugängliche Vorrichtung (Art Steckdose), über die Energie extern eingespeist werden kann
g) einen Anlaßschalter, durch den der Motorstart initiiert werden kann, sobald die Wegfahrsperre deaktiviert wurde; der Motorstartvorgang kann von den (gesetzlich vorgeschriebenen) Sicherungsmaßnahmen/-vorrichtungen entkoppelt werden, so daß der Anlaßvorgang als allein noch verbleibende elektrische Funktion des Zündschlosses durch einen als einfachen Schalter (beispielsweise einen mechanischen Drehschalter) ausgebildeten Anlaßschalter realisiert werden kann.

Das vorgestellte System vereinigt mehrere Vorteile in sich:
- es ist keinerlei mechanischer Schlüssel mehr erforderlich, womit auch der Bedienkomfort wesentlich verbessert wird
- es ist kein aufwendiges Zündschloß mehr notwendig, vielmehr kann für den Startvorgang ein einfacher und damit kostengünstiger Anlaßschalter vorgesehen werden
- durch die mehrfache Redundanz des Öffnungsvorgangs kann das Fahrzeug in jedem Falle (auch im Notfall) geöffnet werden
- die Diebstahlsicherheit wird durch die Verbindung mit der Wegfahrsperre und durch den Wegfall der unsicheren mechanischen Schlüssel erhöht.

Anhand der Zeichnung wird ein Ausführungsbeispiel erläutert; die Figur 1 zeigt schematisch die Komponenten des Schließ-/Motorstartsystems, die Figur 2 die Sendeeinheit und die Figur 3 eine Zugangsmöglichkeit für den Notfall.

Gemäß Figur 2 enthält die Sendeeinheit 10 ("der Schlüssel") eine über den Druckknopf 15 aktivierbare und von der Batterie 12 betriebene Infrarot-Fernbedienungseinheit 11 (große Reichweite, ca. 5 m), eine von der Elektronikeinheit 13 angesteuerte IR-LED 14 sowie eine Transpondereinheit 16 (kurze Reichweite, wenige cm) mit der HF-Spule 17 und der Elektronikeinheit 18; die Elektronikeinheiten 13, 18 von Fernbedienungseinheit 11 und Transpondereinheit 16 können als separate oder gemeinsame Einheit realisiert werden. Der Schlüssel 10 kann als relativ kleine Baueinheit ausgebildet werden und besitzt beispielsweise die Maße 25 mm x 35 mm. Im Normalbetrieb (Figur 1) wird die Fahrertüre 30 des Kraftfahrzeugs 2 vom Benutzer 1 durch Betätigung der IR-Fernbedienungseinheit 11 des Schlüssels 10 entriegelt oder verriegelt. Beim Drücken des Druckknopfs 15 wird ein codiertes IR-Signal 21 an einen im Fahrzeuginneren (beispielsweise an der Fahrzeugdecke) angebrachten IR-Empfänger 24 der Empfangseinheit 20 übermittelt, der mit der Auswerteelektronikeinheit 23 verbunden ist. Die Auswerteelektronikeinheit 23 der Empfangseinheit 20 ist mit dem Steuergerät Türelektronik 33 und dem Steuergerät Wegfahrsperre 60 verbunden; beispielsweise kann die Auswerteelektronikeinheit 23 in das Steuergerät Türelektronik 33 integriert sein. Durch die Auswerteelektronikeinheit 23 wird das eintreffende Signal 21 verifiziert und bei ordnungsgemäß übertragenem Code das Öffnen/Schließen der Fahrzeugtüre(n) 30 und die Entriegelung/Verriegelung der Wegfahrsperre 60 veranlaßt. Der Motorstart erfolgt durch Betätigung eines Anlaßschalters 70, der beispielsweise als 3-oder mehr-stufiger Drehschalter (1. Stufe = Aus, 2. Stufe = Zündung, 3. Stufe = Motorstart) ausgebildet ist.

Für den Notfall (Figur 3) - Ausfall der Fernbedienungs-Batterie 12, Ausfall der Fahrzeug-Batterie 3 - ist an der Außenseite der Fahrertüre 30 eine HF-Spule 40 angebracht (beispielsweise am Türgriff), die durch Betätigung des Türgriffs 31 und somit Schließen des Türgriffschalters 32 der Fahrertüre 30 aktiviert werden kann. Bei einem Ausfall
- der Fernbedienungs-Batterie 12 wird der Schlüssel 10 dicht an den Türgriff 31 gebracht, der Türgriff 31 betätigt und somit eine Energieübertragung von der HF-Spule 40 an die Transpondereinheit 16 initiiert; das codierte Signal 22 kann nun von der Transpondereinheit 16 an die Auswerteelektronikeinheit 23 und von dieser an das Steuergerät Türelektronik 33 übertragen werden, wodurch ein Öffnen der Fahrertüre 30 sowie eine Entriegelung der Wegfahrsperre 60 ermöglicht wird (der Empfänger für das Transpondersignal 22 und für das Fernbedienungssignal 21 kann identisch sein, es können aber auch unterschiedliche Empfänger vorgesehen werden).
- der Fahrzeug-Batterie 3 muß zunächst durch eine Hilfsenergiequelle 51, 52 Energie an die HF-Spule 40 übertragen werden. Hierzu kann beispielsweise eine im Steuergerät Türelektronik 33 integrierte, kleine, langlebige Batterie 51 vorgesehen werden, deren Funktionszustand vom Steuergerät Türelektronik 33 überwacht wird oder es kann eine von außen zugängliche (beispielsweise im Außenspiegel angeordnete) Vorrichtung 52 vorgesehen werden, mittels der von einer externen Energiequelle Energie eingespeist werden kann.

Optional kann der Zustand der Fernbedienungs-Batterie 12 und Fahrzeug-Batterie 3 durch eine optische Anzeige angezeigt werden (beispielsweise durch Blinken oder Verlöschen einer LED beim Ausfall der Batterie 12, 3), so daß der Benutzer 1 abhängig vom Zustand der Batterie 12, 3 die erforderlichen Schritte (Normalbetrieb, Notfall) zum öffnen der Fahrertüre 30 einleiten kann.

## Patentansprüche

1. Schließ- und Motorstartsystem für ein motorangetriebenes Fahrzeug (2), bestehend aus:
a) einer Sendeeinheit (10) aus Fernbedienungseinheit (11) und Transpondereinheit (16) zum Übertragen eines codierten Signals (21, 22),
b) mindestens einer im oder am Fahrzeug (2) angebrachten Empfangseinheit (20) aus mindestens einem Empfänger (24) und mindestens einer Auswerteelektronikeinheit (23) zur Detektion und Verifizierung des codierten Signals (21),
c) einer ersten Steuereinheit (33), die mit der Empfangseinheit (20) verbunden ist und von dieser zum öffnen/Verschließen der Fahrertüre (30) aktivierbar/deaktivierbar ist,
d) einer am Fahrzeug (2) angebrachten und extern aktivierbaren Vorrichtung (40) zur Energieübermittlung, durch die Energie an die Transpondereinheit (16) übermittelt werden kann,
e) einer weiteren Steuereinheit (60), die mit der Empfangseinheit (20) verbunden ist und von dieser bei erfolgreicher Verifizierung des codierten Signals (21) gleichzeitig mit dem Entriegeln/Verriegeln der Fahrertüre (30) deaktivierbar/aktivierbar ist.

2. System nach Anspruch 1, dadurch gekennzeichnet, daß eine im oder am Fahrzeug (2) angebrachte Vorrichtung (51, 52) als Hilfsenergiequelle vorgesehen ist, die mit der Vorrichtung (40) zur Energieübermittlung und der ersten Steuereinheit (33) verbunden ist.

3. System nach Anspruch 1 oder 2, dadurch gekennzeichnet, daß ein Anlaßschalter (70) vorgesehen ist, durch den der Anlaßvorgang des Motors nach erfolgreicher Verifizierung des codierten Signals (21, 22) erfolgen kann.

4. System nach einem der Ansprüche 1 bis 3, dadurch gekennzeichnet, daß die Sendeeinheit (10) eine von einer Batterie (12) gespeiste Fernbedienungseinheit (11) mit einer über einen Druckknopf (15) aktivierbaren Sendediode (14) und einer Elektronikeinheit (13) aufweist.

5. System nach Anspruch 4, dadurch gekennzeichnet, daß die Fernbedienungseinheit (11) als IR-Fernbedienung ausgebildet ist.

6. System nach einem der Ansprüche 1 bis 5, dadurch gekennzeichnet, daß die Transpondereinheit (16) eine HF-Spule (17) und eine Elektronikeinheit (18) aufweist.

7. System nach einem der Ansprüche 1 bis 6, dadurch gekennzeichnet, daß die Auswerteelektronikeinheit(en) (23) der Empfangseinheit (20) in einem oder mehreren der Steuergeräte oder Steuereinheiten (33, 60) des Fahrzeugs (2) integriert ist (sind).

8. System nach einem der Ansprüche 1 bis 7, dadurch gekennzeichnet, daß die erste Steuereinheit (33) das Steuergerät Türelektronik ist.

9. System nach einem der Ansprüche 1 bis 7, dadurch gekennzeichnet, daß die erste Steuereinheit (33) die Auswerteelektronikeinheit (23) der Empfangseinheit (20) ist.

10. System nach einem der Ansprüche 1 bis 9, dadurch gekennzeichnet, daß die Vorrichtung (40) zur Energieübermittlung als HF-Spule ausgebildet ist.

11. System nach Anspruch 10, dadurch gekennzeichnet, daß die HF-Spule (40) an der Fahrertüre (30) angebracht und nach Betätigung des Türgriffs (31) durch Schließen des Türgriffschalters (32) aktivierbar ist.

12. System nach einem der Ansprüche 1 bis 11, dadurch gekennzeichnet, daß die Hilfsenergiequelle als eine in der Fahrertüre (30) integrierte, kleine, langlebige Batterie (51) ausgebildet ist, deren Ladungszustand von einer Meßschaltung überwacht wird.

13. System nach einem der Ansprüche 1 bis 11, dadurch gekennzeichnet, daß die Hilfsenergiequelle als extern zugängliche Kontaktstelle (52) ausgebildet ist, über die aus einer externen Energiequelle Energie einspeisbar ist.

14. System nach einem der Ansprüche 1 bis 13, dadurch gekennzeichnet, daß die weitere Steuereinheit (60) das Steuergerät Wegfahrsperre ist.

15. System nach einem der Ansprüche 1 bis 14, dadurch gekennzeichnet, daß der Anlaßschalter (70) als mechanischer Schalter ausgebildet ist.

16. System nach Anspruch 15, dadurch gekennzeichnet, daß der Anlaßschalter (70) als ein-oder mehrstufiger Drehschalter ausgebildet ist.

17. System nach Anspruch 15, dadurch gekennzeichnet, daß der Anlaßschalter (70) als ein-oder mehrstufiger Druckschalter ausgebildet ist.
